# EUROPEAN PATENT SPECIFICATION

(11) **EP 2 250 568 B1**
(45) Date of publication and mention of the grant of the patent: **17.10.2012**
(21) Application number: 09701850.1
(22) Date of filing: 13.01.2009
(51) Int. Cl.: G06F 13/16, H04N 7/00

(54) **A METHOD FOR DATA STORAGE MEANS AND A SYSTEM WITH DATA STORAGE MEANS**
VERFAHREN FÜR DATENSPEICHERMITTEL UND SYSTEM MIT DATENSPEICHERMITTELN
PROCÉDÉ DESTINÉ À DES MOYENS DE MÉMORISATION DE DONNÉES ET SYSTÈME COMPORTANT DES MOYENS DE MÉMORISATION DE DONNÉES

(30) Priority: 17.01.2008 SE 0850006; 25.01.2008 US 6658 P
(43) Date of publication of application: 17.11.2010
(73) Proprietor: Edgeware AB, 111 22 Stockholm (SE)
(72) Inventor: ROOS, Joachim, S-131 46 Nacka (SE); HENRIKSSON, Karl, S-128 38 Skarpnäck (SE); HOLM, Lukas, S-120 64 Stockholm (SE)
(74) Representative: Melin Granberg, Linda
(86) International application number: PCT/EP2009/050306
(87) International publication number: WO 2009/090163

(56) References cited:
- EP-A- 1 622 391

## Description

### TECHNICAL FIELD

The present invention relates to a system comprising data storage means, and a method for data storage means comprising a set of data storage sub-assemblies and being connectable to storage control means adapted to retrieve, for a plurality of simultaneous user applications, data stored in the data storage means.

### BACKGROUND

In many data storage applications, a plurality of data retrieving tasks are undertaken simultaneously to retrieve data from data storage means. Often, these tasks are controlled by a processor or a memory controller serving a plurality of processors. The tasks can originate from one or more user applications.

Data streaming is one area where such data storage applications occur. Data streaming is conventionally performed on data with video, sound or multimedia content, and enables the playback of such data without the need to download the entire resource file in advance of playback. This means that such data has to be sent at a pace corresponding, at least on average, to the pace at which it is to be presented. In many streaming applications, users, e.g. video viewers, have display devices, e.g. television sets or personal computers, that are connectable, e.g. via an IP-network, to a server including data storage means in which media data is stored. In the case of videos, each user can request individually a streaming session, i.e. a video stored in the data storage means to be displayed, so that the video is displayed to the user immediately upon streaming from the server, i.e. without storage at the display device of the entire video.

Thus, there are in many cases, for example in data streaming, a plurality of simultaneous user applications, for example streaming sessions, and the data retrieved for each user application is in the form of a relatively large coherent set of data, herein referred to as a data composition, which can represent for example a multimedia sequence, e.g. a movie, a music file, an advertisement or a TV station transmission. Thereby, the data storage means might store a large amount of such data compositions, and the user applications can involve retrieving a large number of different data compositions simultaneously. A problem that has to be addressed in such cases is retrieving data with a sustained bandwidth in operations where many simultaneous user applications demand retrieval of separate individual data compositions, and also in operations where the retrieval of the same data composition is demanded by many simultaneous user applications.

One way of solving this problem is to use dynamic random access memory (DRAM) for the data storage means, as suggested in US2003/0095783A1. DRAM provides a very fast access of stored data. However, DRAM provides a relatively low storage capacity, and consumes high levels of power for its operations including cooling. It is also relatively expensive. The combination of low storage capacity and high power consumption necessitates for many applications large assemblies of DRAM units with elaborate cooling arrangements demanding very high levels of power.

It is also suggested in US2003/0095783A1 to use a solid state memory, such as flash memory, for storing data for video/audio streaming applications. However, due to flash memories providing a slow access of stored data, said problem of retrieving data with a sustained bandwidth remains to be solved. EP1622391 discloses the division of a video stream into blocks of equal size, wherein consecutive blocks are stored in consecutive memory banks.

### SUMMARY OF THE INVENTION

It is an object of the invention to provide, in data storage applications involving, on one hand, data storage means storing a plurality of data compositions, and, on the other hand, a plurality of simultaneous user applications each involving retrieving a data composition from the data storage means, a sustained bandwidth during a variety of combinations of user applications.

It is also an object of the invention to provide, in data storage applications involving, on one hand, data storage means storing a plurality of data compositions, and, on the other hand, a plurality of simultaneous user applications each involving retrieving a data composition from the data storage means, a high storage capacity and a low power consumption.

These objects are reached with a method for data storage means comprising a set of data storage sub-assemblies and being connectable to storage control means adapted to retrieve, for a plurality of simultaneous user applications, data stored in the data storage means, the method comprising the steps of
- dividing a data composition into a plurality of payload data subsets, and
- storing the payload data subsets in the data storage sub-assemblies,
- the storage control means being adapted to retrieve, for a user application, the payload data subsets in a predetermined retrieving sequence,
- wherein a sequence of a number of payload data subsets, which number corresponds to the number of data storage sub-assemblies in the set of data storage sub-assemblies, and which payload data subsets follow sequentially one immediately upon the other in the retrieving sequence, are stored in separate ones of the data storage sub-assemblies in the set of data storage sub-assemblies.

It should be noted that, as exemplified below, the data storage sub-assemblies can be banks of dual inline memory modules, dual inline memory modules, individual flash memories, groups of dual inline memory modules, or any other suitable type of sub-assembly of the data storage means. It should also be noted that the set of data storage sub-assemblies can comprise all data storage sub-assemblies of the data storage means. Alternatively, the data storage means can comprise data storage sub-assemblies in addition to those included in the set of data storage sub-assemblies. Thus, the set of data storage sub-assemblies include at least some of the data storage sub-assemblies of the data storage means.

Preferably, the payload data subsets of a data composition are equal in size. Alternatively, the payload data subsets of a data composition can be of different sizes.

The invention provides for the payload data subsets being distributed, when stored, to all data storage sub-assemblies in the set of data storage sub-assemblies, and so that the payload data subsets are stored so that any pair of them, related to each other so that one follows immediately upon the other in the retrieving sequence, are stored in separate ones of the data storage sub-assemblies. Where the data composition represents media data, the payload data subsets will be distributed in a sequence representing a sequence of the presentation of the media data in a normal presentation mode. As exemplified below, there can be other presentation modes, providing other retrieving sequences, for example at trick play modes.

As a result of the invention, requests from the storage control means will be evenly distributed among all data storage sub-assemblies, regardless whether the operational situation of the data storage means is extreme to one end such that all simultaneous user application involve the retrieval of separate, individual data compositions, the operational situation of the data storage means is extreme to another end such that all simultaneous user application involve the retrieval of the same data composition, or the operational situation of the data storage means is a combination of such extremities. This will reduce risks of excessive data queuing and reduce latency considerably. As a result of the invention reducing latency, it is possible to use flash memories with sustained bandwidth, while enjoying the benefits of low power consumption and high storage capacity.

Preferably, further sequences following, in the retrieving sequence, said sequence of payload data subsets are stored in a cyclic manner so that the payload data subsets of each sequence are stored in separate ones of the data storage sub-assemblies in the set of data storage sub-assemblies. Thereby, the data compositions can be stored in a striping way so that sequences of payload data subsets are retrieved in a rotational manner in the data storage sub-assemblies.

Preferably, the data storage means comprise a plurality of dual inline memory modules, and the data storage sub-assemblies are provided as banks of the dual inline memory modules, the method further comprising sending requests to the banks of each dual inline memory module in an alternating, interleaving manner. As will be explained closer below, sending read requests in this alternating manner will allow full use of the capacity of a bus to which the banks of the dual inline memory module are connected.

The objects are also reached with a system comprising data storage means comprising a set of data storage sub-assemblies, the system further comprising storage control means connectable to the data storage means and adapted to retrieve, for a plurality of simultaneous user applications, data stored in the data storage means, the storage control means being adapted to receive a data composition and divide it into a plurality of payload data subsets before the data composition is stored in the data storage means, the storage control means being adapted to retrieve, for a user application, the payload data subsets in a predetermined retrieving sequence, the system being adapted to store the payload data subsets so that a number of payload data subsets, which number corresponds to the number of data storage sub-assemblies in the set of data storage sub-assemblies, and which payload data subsets follow sequentially one immediately upon the other in the retrieving sequence, are stored in separate ones of the data storage sub-assemblies in the set of data storage sub-assemblies. Preferably, the system is adapted to store in a cyclic manner further sequences following, in the retrieving sequence, said sequence of payload data subsets so that the payload data subsets of each sequence are stored in separate ones of the data storage sub-assemblies in the set of data storage sub-assemblies.

Preferably, the data storage means comprise a plurality of flash memories. This will provide low power consumption and high storage capacity, while, as mentioned above, providing a sustained bandwidth for access of the data storage means. As exemplified below, the data storage means can comprise a plurality of dual inline memory modules, and the data storage sub-assemblies are provided as banks of the dual inline memory modules, each bank comprising a plurality of the flash memories.

The data storage means can comprise a plurality of groups, each group comprising a plurality of dual inline memory modules. Thereby, the dual inline memory modules of each group are advantageously fully buffered.

Preferably, the data storage means of the system comprise a plurality of dual inline memory modules, the data storage sub-assemblies are provided as banks of the dual inline memory modules, and a local storage controller of each dual inline memory module is adapted to send requests to the banks of the respective dual inline memory module in an alternating, interleaving manner.

### DESCRIPTION OF THE FIGURES

Below, embodiments of the invention will be described with reference to the drawings, in which
- fig. 1 shows a schematic view of an apparatus adapted to stream media data to user devices,
- fig. 2 shows schematically parts of the apparatus in fig. 1,
- fig. 3 illustrates allocation of data to data storage sub-assemblies of the apparatus in fig. 1,
- fig. 4 illustrates allocation of data within a data storage sub-assembly of the apparatus in fig. 1,
- fig. 5 shows parts of data storage means of the apparatus in fig. 1,
- fig. 6 shows a diagram of events, as a function of time, in a part of data storage means of the apparatus in fig. 1, and
- fig. 7 illustrates allocation of data to data storage sub-assemblies according to an alternative embodiment of the invention.

### DETAILED DESCRIPTION

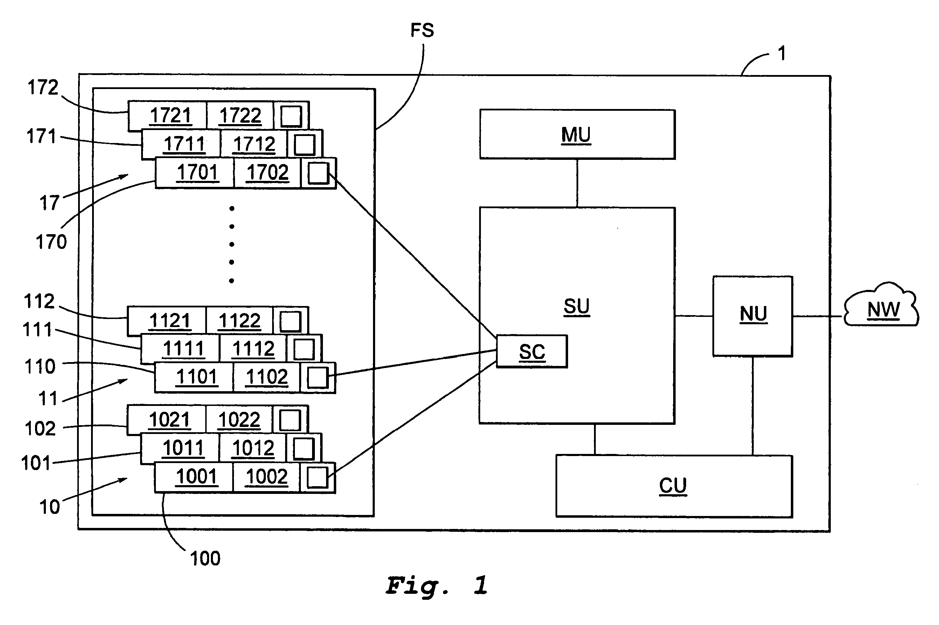

Fig. 1 shows schematically a system 1, herein also referred to as a data handling system 1, in the form of a streaming apparatus 1, adapted to stream media data to user devices, for example in a manner described in the patent applications GB0700313.0, GB0700311.4, GB0700343.7, GB0708734.9, and SE0701995-3 . The streaming apparatus 1 can provide simultaneous user applications, in this example in the form of simultaneous streaming sessions, for the user devices, each user application being individually adapted to the requests of the respective user device. The streaming apparatus comprises a streaming unit SU, for example embodied as an FPGA (Field Programmable Gate Array) hardware unit. The streaming unit SU is adapted to access a memory unit MU, for example embodied as a DRAM (Dynamic Random Access Memory), for queuing media data to be sent during streaming, via a network unit NU of the streaming apparatus 1, and a network NW, to the user devices.

The streaming apparatus 1 also comprises data storage means FS for storing media data and control data as described closer below. The streaming apparatus 1 further comprises storage control means SU, CU, in turn comprising a global storage controller SC comprising retrieving means adapted to access the data storage means FS via a suitable bus (not shown). In this embodiment, the global storage controller SC is included in the streaming unit SU.

The data storage means FS comprises a plurality of DIMMs (Dual Inline Memory Modules) 100-172. The DIMMs 100-172 are arranged in a plurality of groups 10-17, in this example eight groups 10-17. In general, the DIMMs 100-172 could be arranged in any number of groups 10-17. Also, each group 10-17 could comprise any suitable number of DIMMs 100-172.

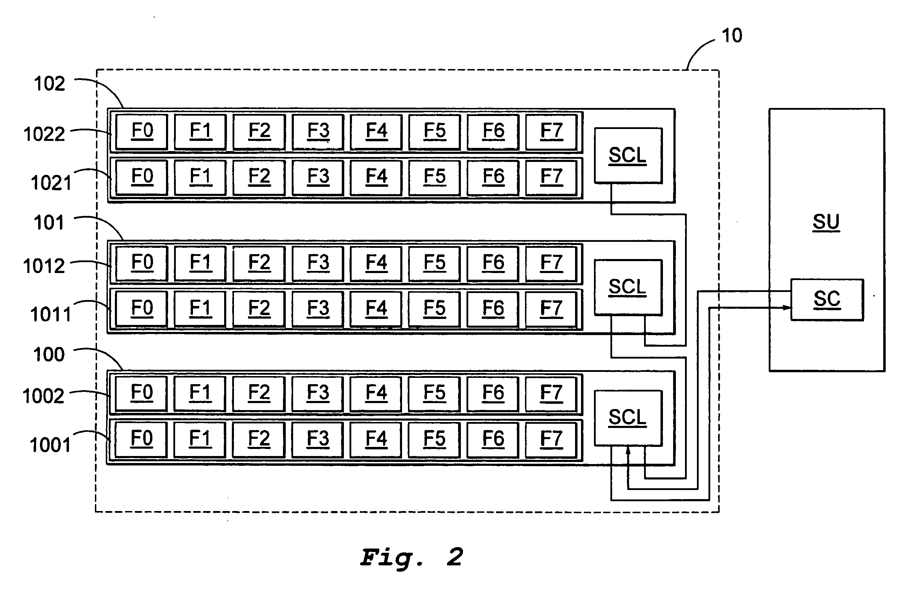

Reference is made to fig. 2, in which one of the DIMM groups 10 is shown as comprising three DIMMs 100-102. Each DIMM 100-102 comprises a local storage controller SCL, and a plurality of flash memories F0-F7, each accessible to the respective local storage controller SCL. In this embodiment, each flash memory F0-F7 is in the form of a NAND (Not AND) -flash memory. The flash memories F0-F7 of each DIMM 100-102 are distributed in two data storage sub-assemblies 1001-1022. The data storage sub-assemblies are in this example also referred to as a first bank 1001, 1011, 1021 or a second bank 1002, 1012, 1022. Each DIMM 100-102 comprises one first bank 1001, 1011, 1021 and one second bank 1002, 1012, 1022, and each bank 1001-1022 comprises a subset F0-F7 of eight flash memories F0-F7. In a practical embodiment, each DIMM 100-102 comprises a planar substrate serving as a carrier for the flash memories F0-F7, the flash memories F0-F7 of the first bank 1001, 1011, 1021 being located on one side of the substrate, and the flash memories F0-F7 of the second bank 1002, 1012, 1022 being located on the other side of the substrate.

As can be seen in fig. 2, the local storage controllers SCL are connected so as to form a serial data link to the global storage controller SC, i.e. they are fully buffered. Preferably, on each DIMM 100-102, four pins (not shown) are used for the serial data link. This provides a fast data connection between the DIMMs 100-102 and the global storage controller SC. Also, since a relative small amount of pins on each DIMM 100-102 are used for this connection, there is a relatively small possibility of a malfunctioning pin.

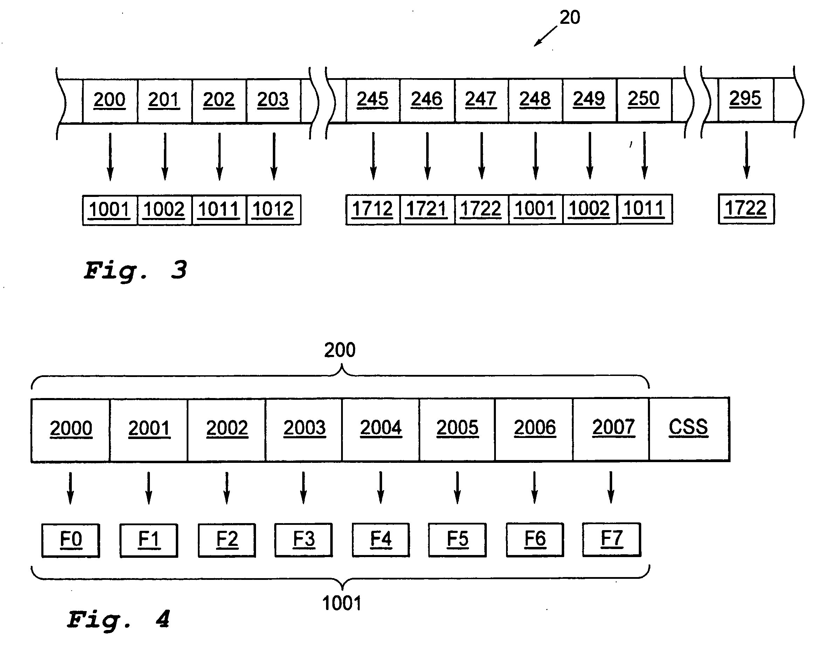

Reference is made to fig. 3 and fig. 4. As stated in said patent applications (GB0700313.0, GB0700311.4, GB0700343.7, GB0708734.9, and SE0701995-3), the media data stored by the streaming apparatus 1 comprises data compositions 20, herein also referred to as payload data sets or payload data flows. Each data composition 20 is a relatively large coherent set of data, for example data representing multimedia sequences, e.g. movies, music files, and/or advertisements. More generally, a data composition 20 can be any form of media data, whether audio, visual, text or code, provided separately or in any combination. Also, a data composition 20 can provide data for a time limited media display, or be received from a continuous flow of data, for example in the form of a transmission from a TV station. As also described in said patent applications, for storing, the storage control means SU, CU of the streaming apparatus 1 further comprises a control unit CU (fig. 1) which is adapted to pre-process the data compositions 20, whereby they are divided into payload data subsets 200-295 (fig. 3), and control data sets are created by the control unit CU, which control data sets are used for retrieving from the data storage means FS respective payload data subsets 200-295 during streaming.

The payload data subsets 200-295 are preferably of a predetermined size, as an example 16 kB. As illustrated in fig. 4, the control data comprises control data subsets CSS, each stored in association with a respective payload data subset 200. More specifically, as described in said patent applications (GB0700313.0, GB0700311.4, GB0700343.7, GB0708734.9, and SE0701995-3), the storage address of each control data subset CSS is linked to the storage address of the respective payload data subset 200 such that the control data subset CSS is retrieved, during streaming, together with the payload data subset 200. The control data subset CSS includes data that is used by the global storage controller SC, (fig. 1), during streaming, for retrieving the following payload data subset 201 and associated control data subset. (As an example, the size of each control data subset CSS is 64 bytes.) Thus the control data subsets CSS provides a retrieving sequence for each data composition 20 corresponding to at least one a user application mode, which retrieving sequence determines the order in which the payload data subsets 200-295 are retrieved from the storage means FS. The retrieving sequence corresponds to the sequence of the payload data subsets as provided in the data composition 20. As an alternative to control data subsets CSS stored with the payload data subsets 200-295, the retrieving sequence can be provided from a table accessible by the global storage controller SC.

It should be noted that there retrieving could be more than one retrieving sequence for a data composition 20. For example, in the case of data for an audio/visual presentation, e.g. a movie, there could be one retrieving sequence corresponding to a normal presentation mode, and one or more retrieving sequences corresponding to respective trick play modes, e.g. a fast forward mode or a reverse mode. Thereby the control data subsets can include information for linking the payload data subsets 200-295 in more than one alternative manner, as described in said patent application GB0700343.7. The control data sets can also be used for editing the data to be streamed as described in said patent application GB0700343.7.

As can be seen in fig. 4, for storing, each payload data subset 200 is divided into eight payload data subset portions 2000-2007. When stored, the eight payload data subset portions 2000-2007 are distributed to the each of the flash memories F0-F7 of a bank 1001 of a DIMM 100, (see also fig. 2). The respective control data subset CSS, which is relatively small is size compared to the payload data subset portions 2000-2007, is stored in one of the flash memories F0-F7 along with a payload data subset portion.

During the pre-processing, the control unit CU (fig. 1) allocates storage space for the respective data composition. As illustrated with the vertical arrows in fig. 3, forty-eight payload data subsets 200-247 of a first sequence of payload data subsets, which payload data subsets follow sequentially one immediately upon the other in the data composition 20, are stored in individual, separate ones of the forty-eigbt banks 1001-1722 of the storage means FS. For this presentation, the forty-eight banks 1001-1722 are also referred to as a set of data storage sub-assemblies. In a cyclic manner, forty-eight payload data subsets 248-295 of a second sequence which follows in the data composition 20 immediately upon the first sequence of payload data subsets 200-247, are stored in the individual, separate ones of the banks 1001-1722. In this cyclic manner, the entire data composition 20 is stored in the storage means FS, so that the payload data subsets are distributed evenly to all banks 1001-1722. As a result, each payload data subset 201 is retrieved from a bank 1002 different from the bank 1001 from which the immediately preceding payload data subset 200 was retrieved.

The storing strategy illustrated in fig. 3 is followed for all data composition 20 in the storage means FS. As a result, requests from the global storage controller SC will be evenly distributed among all banks 1001-1722, regardless whether the operational situation of the storage means FS is extreme to one end such that all simultaneous user application involve the retrieval of separate, individual data compositions 20, the operational situation of the storage means FS is extreme to another end such that all simultaneous user application involve the retrieval of the same data composition 20, or the operational situation of the storage means is a combination of such extremities. Requests from the global storage controller SC can be, for example, any of the requests known in the art as write, read and erase. The distribution of the global storage controller SC requests between the banks 1001-1722 will minimise risks of excessive data queuing and reduce latency considerably.

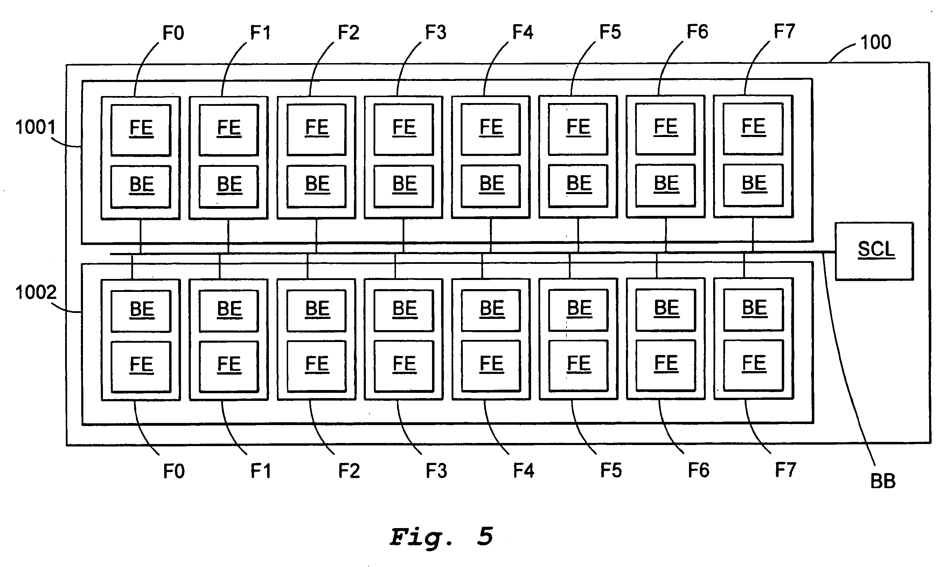

Fig. 5 shows schematically one of the DIMMs 100. Each flash memory F0-F7 comprises a storage element FE and a buffer element BE, the latter in the form of a SRAM (Static Random Access) Buffer. Communication between the buffer elements BE of both banks 1001, 1002 and the local storage controller SCL is carried out by means of a DIMM bus BB.

Each flash memory F0-F7 is arranged to retrieve a set of stored data from the storage element FE by a copying step and a reading step. In the copying step, the set of data is copied from the storage element FE to the buffer element BE. Thereupon, the reading step is performed, whereby the set of data is read by the local storage controller SCL from the buffer element BE. In this example, the copying step takes 100 ms and the reading step takes 200 ms, which is typical for a flash memory F0-F7 of a NAND-flash memory type. When a payload data subset 200 (fig. 4) is retrieved, the payload data subset portions 2000-2007 thereof are copied essentially simultaneously from the respective storage elements FE to the respective buffer elements BE in the flash memories F0-F7 of one of the banks 1001. Thereafter, the payload data subset portions 2000-2007 are read essentially simultaneously by the local storage controller SCL from the buffer elements BE of the flash memories F0-F7 of the bank 1001.

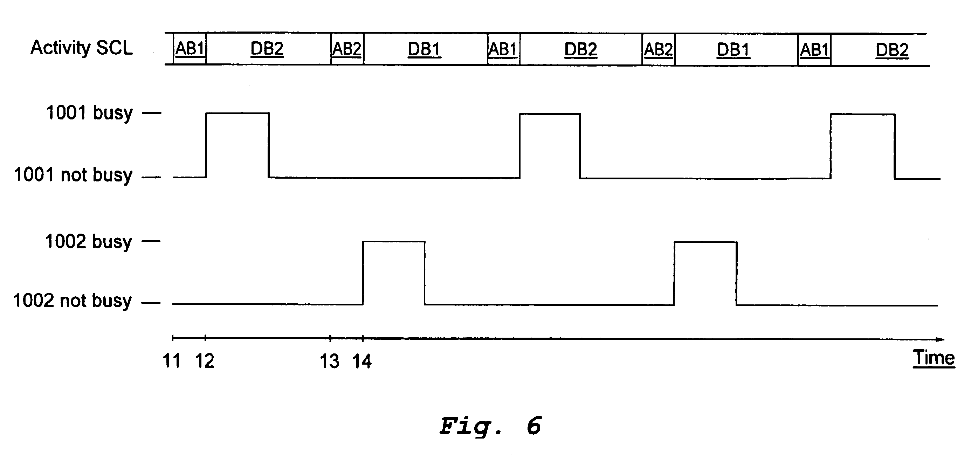

Reference is made to fig. 6. While the copying step is carried out, the respective flash memory F0-F7 is busy. The local storage controller SCL is adapted to send read requests in an alternating manner to the first and second bank 1001, 1002. More specifically, the local storage controller SCL is adapted to send, (see fig. 6 at the time t1), a read request AB1 for a payload data subset to the flash memories F0-F7 of the first bank 1001, whereupon the flash memories F0-F7 of the first bank 1001 will become busy. As indicated in fig. 6, after having sent a read request AB1 to the flash memories F0-F7 of the first bank 1001, the local storage controller SCL reads DB2, (see fig. 6 at the time t2), a payload data subset from the flash memories F0-F7 of the second bank 1002. The local storage controller SCL is further adapted to send, upon having read DB2 a payload data subset from the flash memories F0-F7 of the second bank 1002, a read request AB2, (see fig. 6 at the time t4), for a further payload data subset to the flash memories F0-F7 of the second bank 1002, whereupon the flash memories F0-F7 of the second bank 1002 will become busy. After having sent a read request AB2 to the flash memories F0-F7 of the second bank 1002, the local storage controller SCL reads DB 1, (see fig. 6 at the time t5), a payload data subset from the flash memories F0-F7 of the second bank 1001. Sending read requests in this alternating manner will allow full use of the capacity of the DIMM bus BB. It should be noted that the interleaving manner of requests between the banks described here can be carried out also with other types of requests, such as write or erase requests.

Above, an embodiment of the invention has been described in a streaming apparatus. However, it should be noted that the invention is applicable to any type of system or apparatus, where data compositions stored in data means are to be retrieved according to a plurality of simultaneous user applications. For example, as an alternative the invention can be applied to a system in which the control unit CU is provided remote from the data storage means FS.

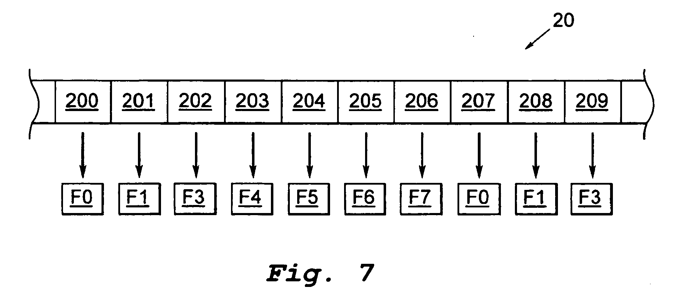

In the embodiment described above, the data storage sub-assemblies 1001-1722, among which the payload data subsets are distributed, are provided in the form of banks 1001-1722, two of which are arranged in each DIMM 100-172 and each comprising a subset of the flash memories F0-F7. Alternatively, the data storage sub-assemblies, among which the payload data subsets are distributed, could be provided in the form of DIMMs, groups of DIMMs, or as individual flash memories F0-F7. Fig. 7 shows an example of data storage means comprising eight flash memories F0-F7, into which a data composition is allocated in a manner similar to what was described above with reference to fig. 3. It should also be noted that as an alternative to NAND-flash memories, NOR (Not OR)-flash memories could be used.

## Claims

1. A data streaming method for data storage means (FS) comprising a set of data storage sub-assemblies (1001-1722) and being connectable to storage control means (SC, CU) adapted to retrieve, for a plurality of simultaneous user applications, data stored in the data storage means (FS), the method comprising the steps of
- dividing a data composition (20) into a plurality of payload data subsets (200-295), and dividing each payload data sub-set (200-295) into a number of payload data subset portions (2000-2007), and
- storing the payload data subsets (200-295) in the data storage sub-assemblies (1001-1722) so that each of the payload data subset portions (2000-2007) of each payload data sub-set (200-295) is distributed to one of a plurality of flash memories (F0-F7) comprised in each data storage sub-assembly (1001-1722),
- the storage control means (SC, CU) being adapted to retrieve, for a user application, the payload data subsets (200-295) in a predetermined retrieving sequence,
wherein a sequence of a number of payload data subsets (200-247), which number corresponds to the number of data storage sub-assemblies (1001-1722) in the set of data storage sub-assemblies (1001-1722), and which payload data subsets (200-247) follow sequentially one immediately upon the other in the retrieving sequence, are stored in separate ones of the data storage sub-assemblies (1001-1722) in the set of data storage sub-assemblies (1001-1722); and
- wherein further sequences following, in the retrieving sequence, said sequence of payload data subsets (200-247) are stored in a cyclic manner so that the payload data subsets (248-295) of each sequence are stored in separate ones of the data storage sub-assemblies (1001-1722) in the set of data storage sub-assemblies (1001-1722).

2. A method according to claim 1, wherein the data storage means (FS) comprise a plurality of dual inline memory modules (100-172), and the data storage sub-assemblies are provided as banks (1001-1722) of the dual inline memory modules (100-172), the method further comprising sending requests to the banks (1001-1722) of each dual inline memory module (100-172) in an alternating, interleaving manner.

3. A data streaming system (1) comprising data storage means (FS) comprising a set of data storage sub-assemblies (1001-1722), the system further comprising storage control means (SC, CU) connectable to the data storage means (FS) and adapted to retrieve, for a plurality of simultaneous user applications, data stored in the data storage means (FS), **characterized in that**
- the storage control means (SC, CU) is adapted to receive a data composition (20); to divide it into a plurality of payload data subsets (200-295), and to divide each payload data subsets (200-295) into a number of payload data subset portions (2000-2007), before the data composition (20) is stored in the data storage means (FS),
- the storage control means (SC, CU) being adapted to retrieve, for a user application, the payload data subsets (200-295) in a predetermined retrieving sequence,
- the system being adapted to store the payload data subsets (200-295) so that a number of payload data subsets (200-295), which number corresponds to the number of data storage sub-assemblies (1001-1722) in the set of data storage sub-assemblies (1001-1722), and which payload data subsets (200-295) follow sequentially one immediately upon the other in the retrieving sequence, are stored in separate ones of the data storage sub-assemblies (1001-1722) in the set of data storage sub-assemblies (1001-1722) and so that each of the payload data subset portions (2000-2007) of each payload data sub-set (200-295) is distributed to one of a plurality of flash memories (F0-F7) comprised in each data storage sub-assembly (1001-1722), and
- the system being adapted to store in a cyclic manner further sequences following, in the retrieving sequence, said sequence of payload data subsets (200-295) so that the payload data subsets (200-295) of each sequence are stored in separate ones of the data storage sub-assemblies (1001-1722) in the set of data storage sub-assemblies (1001-1722).

4. A system according to claim 3, wherein the data storage means (FS) comprise a plurality of dual inline memory modules (100-172), and the data storage sub-assemblies are provided as banks (1001-1722) of the dual inline memory modules (100-172), each bank (1001-1722) comprising a plurality of the flash memories (F0-F7).

5. A system according to claim 4, wherein the data storage means (FS) comprise a plurality of groups (10-17), each group (10-17) comprising a plurality of dual inline memory modules (100-172).

6. A system according to claim 5, wherein the dual inline memory modules (100-172) of each group (10-17) are fully buffered.

7. A system according to any one of claims 3-6, wherein the data storage means (FS) comprise a plurality of dual inline memory modules (100-172), the data storage sub-assemblies are provided as banks (1001-1722) of the dual inline memory modules (100-172), and a local storage controller (SCL) of each dual inline memory module (100-172) is adapted to send requests to the banks (1001-1722) of the respective dual inline memory module (100-172) in an alternating, interleaving manner.

## Patentansprüche

1. Daten-Streaming-Verfahren für Datenspeichermittel (FS), die eine Menge von Datenspeicherungs-Baugruppen (1001-1722) umfassen und mit Speicherungs-Steuermitteln (SC, CU) verbindbar sind, die dafür ausgelegt sind, für mehrere simultane Benutzeranwendungen in den Datenspeicherungsmitteln (FS) gespeicherte Daten abzurufen, wobei das Verfahren die folgenden Schritte umfasst:
- Aufteilen einer Datenzusammenstellung (20) in mehrere Nutzinformations-Datenteilmengen (200-295) und Aufteilen jeder Nutzinformations-Datenteilmenge (200-295) in eine Anzahl von Nutzinformations-Datenteilmengenteile (2000-2007) und
- Speichern der Nutzinformations-Datenteilmengen (200-295) in den Datenspeicherungs-Baugruppen (1001-1722) dergestalt, dass jeder der Nutzinformations-Datenteilmengenteile (2000-2007) jeder Nutzinformations-Datenteilmenge (200-295) auf einen von mehreren Flash-Speichern (F0-F7) verteilt wird, die in jeder Datenspeicherungs-Baugruppe (1001-1722) enthalten sind,
- wobei die Speicherungs-Steuermittel (SC, CU) dafür ausgelegt sind, für eine Benutzeranwendung die Nutzinformations-Datenteilmengen (200-295) in einer vorbestimmten Empfangssequenz abzurufen,
wobei eine Sequenz einer Anzahl von Nutzinformations-Datenteilmengen (200-247), wobei die Anzahl der Anzahl der Datenspeicherungs-Baugruppen (1001-1722) in der Menge von Datenspeicherungs-Baugruppen (1001-1722) entspricht und wobei die Nutzinformations-Datenteilmengen (200-247) sequentiell unmittelbar eine nach der anderen in der Abrufsequenz folgen, in separaten der Datenspeicherungs-Baugruppen (1001-1722) in der Menge von Datenspeicherungs-Baugruppen (1001-1722) gespeichert wird; und
- wobei weitere Sequenzen, die in der Abrufsequenz der Sequenz von Nutzinformations-Datenteilmengen (200-247) folgen, auf zyklische Weise gespeichert werden, dergestalt, dass die Nutzinformations-Datenteilmengen (248-295) jeder Sequenz in separaten der Datenspeicherungs-Baugruppen (1001-1722) in der Menge von Datenspeicherungs-Baugruppen (1001-1722) gespeichert werden.

2. Verfahren nach Anspruch 1, wobei die Datenspeicherungsmittel (FS) mehrere Dual-Inline-Speichermodule (100-172) umfassen und die Datenspeicherungs-Baugruppen als Banken (1001-1722) der Dual-Inline-Speichermodule (100-172) vorgesehen sind, wobei das Verfahren ferner das Senden von Anforderungen zu den Banken (1001-1722) jedes Dual-Inline-Speichermoduls (100-172) auf alternierende verschachtelnde Weise umfasst.

3. Daten-Streaming-System (1), das Datenspeicherungsmittel (FS) umfasst, die eine Menge von Datenspeicherungs-Baugruppen (1001-1722) umfassen, wobei das System ferner Speicherungs-Steuermittel (SC, CU) umfasst, die mit den Datenspeicherungsmitteln (FS) verbindbar und dafür ausgelegt sind, für mehrere simultane Benutzeranwendungen in den Datenspeicherungsmitteln (FS) gespeicherte Daten abzurufen, **dadurch gekennzeichnet, dass**
- die Speicherungs-Steuermittel (SC, CU) dafür ausgelegt sind, eine Datenzusammenstellung (20) zu empfangen; sie in mehrere Nutzinformations-Datenteilmengen (200-295) aufzuteilen und jede Nutzinformations-Datenteilmenge (200-295) in einer Anzahl von Nutzinformations-Datenteilmengenteilen (2000-2007) aufzuteilen, bevor die Datenzusammenstellung (20) in den Datenspeicherungsmitteln (FS) gespeichert wird,
- die Speicherungs-Steuermittel (SC, CU) dafür ausgelegt sind, für eine Benutzeranwendung die Nutzinformations-Datenteilmengen (200-295) in einer vorbestimmten Abrufsequenz abzurufen,
- das System dafür ausgelegt ist, die Nutzinformations-Datenteilmengen (200-295) dergestalt zu speichern, dass eine Anzahl von Nutzinformations-Datenteilmengen (200-295), wobei die Anzahl der Anzahl der Datenspeicherungs-Baugruppen (1001-1722) in der Menge von Datenspeicherungs-Baugruppen (1001-1722) entspricht und wobei die Nutzinformations-Datenteilmengen (200-295) sequentiell unmittelbar eine nach der anderen in der Abrufsequenz folgen, in separaten der Datenspeicherungs-Baugruppen (1001-1722) in der Menge von Datenspeicherungs-Baugruppen (1001-1722) gespeichert werden, und dergestalt, dass jeder der Nutzinformations-Datenteilmengenteile (2000-2007) jeder Nutzinformations-Datenteilmenge (200-295) auf einen von mehreren Flash-Speichern (F0-F7) verteilt wird, die in jeder Datenspeicherungs-Baugruppe (1001-1722) enthalten sind, und
- das System dafür ausgelegt ist, weitere Sequenzen, die in der Abrufsequenz der Sequenz von Nutzinformations-Datenteilmengen (200-295) folgen, auf zyklische Weise zu speichern, dergestalt, dass die Nutzinformations-Datenteilmengen (200-295) jeder Sequenz in separaten der Datenspeicherungs-Baugruppen (1001-1722) in der Menge von Datenspeicherungs-Baugruppen (1001-1722) gespeichert werden.

4. System nach Anspruch 3, wobei die Datenspeicherungsmittel (FS) mehrere Dual-Inline-Speichermodule (100-172) umfassen und die Datenspeicherungs-Baugruppen als Banken (1001-1722) der Dual-Inline-Speichermodule (100-172) vorgesehen sind, wobei jede Bank (1001-1722) mehrere der Flash-Speicher (F0-F7) umfasst.

5. System nach Anspruch 4, wobei die Datenspeicherungsmittel (FS) mehrere Gruppen (10-17) umfassen, wobei jede Gruppe (10-17) mehrere Dual-Inline-Speichermodule (100-172) umfasst.

6. System nach Anspruch 5, wobei die Dual-Inline-Speichermodule (100-172) jeder Gruppe (10-17) voll gepuffert sind.

7. System nach einem der Ansprüche 3-6, wobei die Datenspeicherungsmittel (FS) mehrere Dual-Inline-Speichermodule (100-172) umfassen, die Datenspeicherungs-Baugruppen als Banken (1001-1722) der Dual-Inline-Speichermodule (100-172) vorgesehen sind und eine lokale Speicherungssteuerung (SCL) jedes Dual-Inline-Speichermoduls (100-172) dafür ausgelegt ist, Anforderungen zu den Banken (1001-1722) des jeweiligen Dual-Inline-Speichermoduls (100-172) auf alternierende verschachtelnde Weise zu senden.

## Revendications

1. Procédé de diffusion de données en flux continu pour un moyen de stockage de données (FS) comprenant un ensemble de sous-assemblages de stockage de données (1001-1722) et raccordable à un moyen de commande de stockage (SC, CU) conçu pour extraire, pour une pluralité d'applications d'utilisateur simultanées, des données stockées dans le moyen de stockage de données (FS), le procédé comprenant les étapes consistant à :
- diviser une composition de données (20) en une pluralité de sous-ensembles de données de charge utile (200-295), et diviser chaque sous-ensemble de données de charge utile (200-295) en un certain nombre de parties de sous-ensemble de données de charge utile (2000-2007), et
- stocker les sous-ensembles de données de charge utile (200-295) dans les sous-assemblages de stockage de données (1001-1722) de manière à distribuer chacune des parties de sous-ensemble de données de charge utile (2000-2007) de chaque sous-ensemble de données de charge utile (200-295) dans une parmi une pluralité de mémoires flash (F0-F7) contenues dans chaque sous-assemblage de stockage de données (1001-1722),
- le moyen de commande de stockage (SC, CU) étant conçu pour extraire, pour une application d'utilisateur, les sous-ensembles de données de charge utile (200-295) selon une séquence d'extraction prédéfinie,
- une séquence d'un certain nombre de sous-ensembles de données de charge utile (200-247), lequel nombre correspond au nombre de sous-assemblages de stockage de données (1001-1722) dans l'ensemble de sous-assemblages de stockage de données (1001-1722) et lesquels sous-ensembles de données de charge utile (200-247) se suivent séquentiellement l'un juste après l'autre dans la séquence d'extraction, étant stockée dans des sous-assemblages distincts parmi les sous-assemblages de stockage de données (1001-1722) dans l'ensemble de sous-assemblages de stockage de données (1001-1722) ; et
- d'autres séquences qui suivent, dans la séquence d'extraction, ladite séquence de sous-ensembles de données de charge utile (200-247) étant stockées d'une manière cyclique de manière à stocker les sous-ensembles de données de charge utile (248-295) de chaque séquence dans des sous-assemblages distincts parmi les sous-assemblages de stockage de données (1001-1722) dans l'ensemble de sous-assemblages de stockage de données (1001-1722).

2. Procédé selon la revendication 1, le moyen de stockage de données (FS) comprenant une pluralité de modules de mémoire à double rangée de connexions (100-172), et les sous-assemblages de stockage de données constituant des blocs (1001-1722) des modules de mémoire à double rangée de connexions (100-172), le procédé comprenant en outre l'étape consistant à transmettre des demandes aux blocs (1001-1722) de chaque module de mémoire à double rangée de connexions (100-172) d'une manière entrelacée alternée.

3. Système de diffusion de données en flux continu (1), comprenant un moyen de stockage de données (FS) comprenant un ensemble de sous-assemblages de stockage de données (1001-1722), le système comprenant en outre un moyen de commande de stockage (SC, CU) raccordable au moyen de stockage de données (FS) et conçu pour extraire, pour une pluralité d'applications d'utilisateur simultanées, des données stockées dans le moyen de stockage de données (FS), le système étant **caractérisé en ce que** :
- le moyen de commande de stockage (SC, CU) est conçu pour recevoir une composition de données (20) ; pour la diviser en une pluralité de sous-ensembles de données de charge utile (200-295), et pour diviser chaque sous-ensemble de données de charge utile (200-295) en un certain nombre de parties de sous-ensemble de données de charge utile (2000-2007) avant le stockage de la composition de données (20) dans le moyen de stockage de données (FS),
- le moyen de commande de stockage (SC, CU) est conçu pour extraire, pour une application d'utilisateur, les sous-ensembles de données de charge utile (200-295) selon une séquence d'extraction prédéfinie,
- le système est conçu pour stocker les sous-ensembles de données de charge utile (200-295) de manière à stocker, dans des sous-assemblages distincts parmi les sous-assemblages de stockage de données (1001-1722) dans l'ensemble de sous-assemblages de stockage de données (1001-1722), un certain nombre de sous-ensembles de données de charge utile (200-295), lequel nombre correspond au nombre de sous-assemblages de stockage de données (1001-1722) dans l'ensemble de sous-assemblages de stockage de données (1001-1722) et lesquels sous-ensembles de données de charge utile (200-295) se suivent séquentiellement l'un juste après l'autre dans la séquence d'extraction, et de manière à distribuer chacune des parties de sous-ensemble de données de charge utile (2000-2007) de chaque sous-ensemble de données de charge utile (200-295) dans une parmi une pluralité de mémoires flash (F0-F7) contenues dans chaque sous-assemblage de stockage de données (1001-1722), et
- le système est conçu pour stocker d'une manière cyclique d'autres séquences qui suivent, dans la séquence d'extraction, ladite séquence de sous-ensembles de données de charge utile (200-295) de manière à stocker les sous-ensembles de données de charge utile (200-295) de chaque séquence dans des sous-assemblages distincts parmi les sous-assemblages de stockage de données (1001-1722) dans l'ensemble de sous-assemblages de stockage de données (1001-1722).

4. Système selon la revendication 3, le moyen de stockage de données (FS) comprenant une pluralité de modules de mémoire à double rangée de connexions (100-172), et les sous-assemblages de stockage de données constituant des blocs (1001-1722) des modules de mémoire à double rangée de connexions (100-172), chaque bloc (1001-1722) comprenant une pluralité des mémoires flash (F0-F7).

5. Système selon la revendication 4, le moyen de stockage de données (FS) comprenant une pluralité de groupes (10-17), chaque groupe (10-17) comprenant une pluralité de modules de mémoire à double rangée de connexions (100-172).

6. Système selon la revendication 5, les modules de mémoire à double rangée de connexions (100-172) de chaque groupe (10-17) étant à mise en tampon intégrale.

7. Système selon l'une quelconque des revendications 3 à 6, le moyen de stockage de données (FS) comprenant une pluralité de modules de mémoire à double rangée de connexions (100-172), les sous-assemblages de stockage de données constituant des blocs (1001-1722) des modules de mémoire à double rangée de connexions (100-172), et une unité de commande locale de stockage (SCL) de chaque module de mémoire à double rangée de connexions (100-172) étant conçue pour transmettre des demandes aux blocs (1001-1722) de chaque module de mémoire à double rangée de connexions (100-172) d'une manière entrelacée alternée.
